(19) Europäisches Patentamt / European Patent Office / Office européen des brevets

(11) **EP 4 729 498 A1**

(12) **EUROPEAN PATENT APPLICATION**
published in accordance with Art. 153(4) EPC

(43) Date of publication:
**22.04.2026 Bulletin 2026/17**

(21) Application number: **24823448.6**

(22) Date of filing: **13.06.2024**

(51) International Patent Classification (IPC):
**C04B 37/02** (2006.01)

(52) Cooperative Patent Classification (CPC):
**C04B 37/02**

(86) International application number:
**PCT/JP2024/021572**

(87) International publication number:
**WO 2024/257835 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.06.2023 JP 2023098151**

(71) Applicant: **Kyocera Corporation
Kyoto-shi, Kyoto 612-8501 (JP)**

(72) Inventor: **YUGUCHI, Akio
Kyoto-shi, Kyoto 612-8501 (JP)**

(74) Representative: **Viering, Jentschura & Partner mbB
Patent- und Rechtsanwälte
Am Brauhaus 8
01099 Dresden (DE)**

(54) **JOINED BODY OF METAL AND INSULATOR, USE THEREOF, AND METHOD FOR PRODUCING JOINED BODY OF METAL AND INSULATOR**

(57)    A joined body includes: a metal member; an insulating member; and a joining material that joins the metal member and the insulating member, in which when a site in contact with the joining material on a surface of the metal member is defined as a joining portion, an average crystal grain size of a surface layer of the metal member in the joining portion is smaller than an average crystal grain size of an inner portion of the metal member. The joined body is used for a hermetic terminal or the like.

FIG. 2

**Description**

TECHNICAL FIELD

The present disclosure relates to a joined body of a metal and an insulator, uses such as a hermetic terminal including the joined body, and a method for producing a joined body of a metal and an insulator.

BACKGROUND OF INVENTION

The hermetic terminal is also called a hermetic seal or the like, and is used as, for example, an introduction port for signals and currents inside and outside a chamber, piping, and the like that require hermeticity. The hermetic terminal usually includes a conduction pin having a columnar shape, an insulating member that is an insulator having a through hole for inserting the conduction pin, and a sleeve having a tubular shape surrounding an outer peripheral surface of the insulating member. The conduction pin and the sleeve include a metal member. Therefore, an advanced joining technique between the insulating member and the metal member is required.

Patent Document 1 describes a through terminal including a tubular member, a plate member (corresponding to the insulating member) including a ceramic insulation material hermetically joined to an inner periphery of the tubular member, and a pin including a conductive material penetrating the plate member. Patent Document 1 describes that the tubular member is an alloy containing at least iron, nickel, and cobalt as components.

In order to maintain hermeticity, the through terminal of Patent Document 1 is joined between the plate member including the ceramic insulation material and the pin including the conductive material such as copper, with a metal pipe interposed therebetween. It is described that this enables the through terminal to maintain hermeticity regardless of residual stress.

CITATION LIST

PATENT LITERATURE

Patent Document 1: JP 2003-323856 A

SUMMARY

A joined body of a metal and an insulator (hereinafter, sometimes simply called a "joined body") according to the present disclosure includes a metal member, an insulating member, and a joining material that joins the metal member and the insulating member. When a site in contact with the joining material on a surface of the metal member is defined as a joining portion, an average crystal grain size of a surface layer of the metal member in the joining portion is smaller than an average crystal grain size of an inner portion of the metal member.

The joined body of the present disclosure is used for uses such as an electromagnetic wave permeable window member, a power feeding terminal, and a hermetic terminal.

A method for producing a joined body of the present disclosure includes: preparing a metal member, an insulating member, and a joining material containing metal or glass; joining the insulating member and the metal member with the joining material to fabricate a pre-joined body; and cooling the pre-joined body at a temperature of -100°C or less to obtain a joined body.

BRIEF DESCRIPTION OF THE DRAWINGS

FIG. 1 is a perspective view illustrating a joined body according to one embodiment of the present disclosure.

FIG. 2 is a cross-sectional view of the joined body illustrated in FIG. 1.

FIG. 3 is an enlarged cross-sectional view of a portion A in FIG. 2.

FIG. 4A is an enlarged cross-sectional view illustrating another example of a joining portion at the portion A in FIG. 2.

FIG. 4B is an enlarged cross-sectional view illustrating still another example of the joining portion at the portion A in FIG. 2.

FIG. 5A is an enlarged cross-sectional view illustrating an example of not being a joining portion.

FIG. 5B is an enlarged cross-sectional view illustrating another example of not being a joining portion.

FIG. 6 is an enlarged cross-sectional view of a portion B in FIG. 2.

FIG. 7A is an enlarged cross-sectional view illustrating another example of the joining portion at the portion B in FIG. 2.

FIG. 7B is an enlarged cross-sectional view illustrating still another example of the joining portion at the portion B in FIG. 2.

FIG. 8 is a cross-sectional view of another hermetic terminal of the present disclosure.

FIG. 9A is an enlarged cross-sectional view illustrating another example of the joining portion at the portion A in FIG. 2.

FIG. 9B is an enlarged cross-sectional view illustrating another example of the joining portion at the portion B in FIG. 2.

FIG. 10 is a microscope image for describing a method for specifying the joining portion in the present disclosure.

FIG. 11 is a microscope image for specifying a position of a surface layer away from the joining portion in the present disclosure.

FIG. 12 is a flowchart showing one embodiment of a method for producing the joined body of the present disclosure.

FIG. 13 is an exploded view illustrating a method for assembling each member constituting the joined body of the present disclosure.

FIG. 14A is a microscope image (magnification: 1500 times) capturing a crystal shape at a joining portion of a first metal member in the present disclosure.

FIG. 14B is a microscope image (magnification: 1500 times) capturing a crystal shape at a position away from the joining portion of the first metal member in the present disclosure.

FIG. 15A is a microscope image tracing the crystal shape illustrated in FIG. 14A.

FIG. 15B is a microscope image tracing the crystal shape illustrated in FIG. 14B.

FIG. 16A is a view illustrating the trace of the crystal shape illustrated in FIG. 15A.

FIG. 16B is a view illustrating the trace of the crystal shape illustrated in FIG. 15B.

FIG. 17A is a graph showing a change in an average crystal grain size with respect to a distance ($\mu$m) from a surface of the first metal member, which is determined from FIGs. 15A and 15B.

FIG. 17B is a graph showing a refinement ratio of a crystal (average crystal grain size of an inner portion is 100%) with respect to a depth percentage (%) from the surface of the first metal member, which is determined from FIGs. 15A and 15B.

FIG. 18A is a microscope image (magnification: 1500 times) capturing the crystal shapes of the surface layer and the inner portion of the joining portion of a second metal member in the present disclosure, and tracing the crystal shape.

FIG. 18B is a microscope image (magnification: 1500 times) capturing the crystal shapes of the surface layer and the inner portion away from the joining portion of the second metal member in the present disclosure, and tracing the crystal shape.

FIG. 19A is a view illustrating the trace of the crystal shape illustrated in FIG. 18A.

FIG. 19B is a view illustrating the trace of the crystal shape illustrated in FIG. 18B.

FIG. 20A is a graph showing a change in an average crystal grain size with respect to a distance ($\mu$m) from a surface of the second metal member, which is determined from FIGs. 19A and 19B.

FIG. 20B is a graph showing a refinement ratio of a crystal (average crystal grain size of an inner portion is 100%) with respect to a depth percentage (%) from the surface of the second metal member, which is determined from FIGs. 19A and 19B.

FIG. 21A is a microscope image (magnification: 1500 times) capturing the crystal shapes of the surface layer and the inner portion of a metal simple substance immersed in liquid nitrogen to be cooled, and tracing the crystal shape.

FIG. 21B is a microscope image (magnification: 1500 times) capturing the crystal shapes of the surface layer and the inner portion of a metal simple substance not subjected to low-temperature treatment, and tracing the crystal shape.

FIG. 22A is a view illustrating the trace of the crystal shape illustrated in FIG. 21A.

FIG. 22B is a view illustrating the trace of the crystal shape illustrated in FIG. 21B.

FIG. 23A is a graph showing a change in an average crystal grain size with respect to a distance ($\mu$m) from a surface of the metal simple substance, which is determined from FIGs. 21A and 21B.

FIG. 23B is a graph showing a refinement ratio of a crystal (average crystal grain size of an inner portion is 100%) with respect to a depth percentage (%) from the surface of the metal simple substance, which is determined from FIGs. 21A and 21B.

## DESCRIPTION OF EMBODIMENTS

Hereinafter, the joined body according to an embodiment of the present disclosure will be described with reference to the drawings. However, for ease of explanation, each of the drawings referenced below illustrates the embodiment of the present disclosure in a simplified manner. Accordingly, the joined body disclosed below can include any component not illustrated in each of the drawings referenced. The dimensions of the members in each of the drawings do not faithfully represent the actual dimensions of the components, the dimension ratios of the respective members, and the like.

Since the through terminal described in Patent Document 1 described above has low mechanical strength, a crack is likely to occur in the tubular member, the pipe, and the pin including a metal material present near a brazed joining portion when stress is applied from the outside. In particular, when the through terminal is used under a low-temperature environment or a high-pressure environment, a large stress is applied to a metal material near a brazed portion, and a crack is likely to occur in the tubular member, the pipe, and the pin. When a crack occurs in the tubular member, the pipe, and the pin, the hermeticity of the through terminal decreases. In particular, a crack is likely to occur when stress is repeatedly applied.

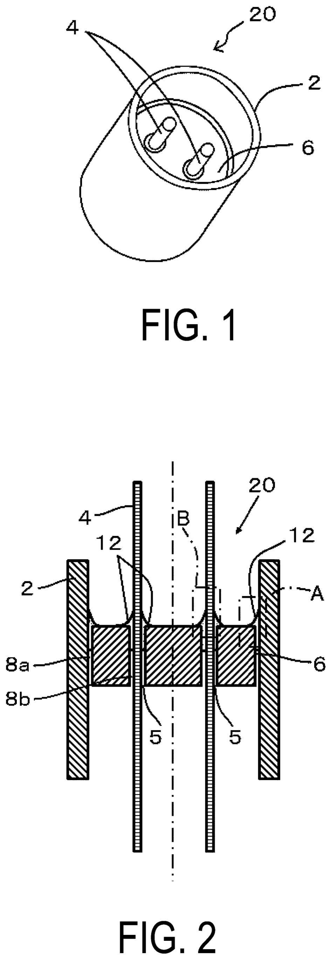

FIG. 1 is a perspective view illustrating a joined body 20 according to the present embodiment, and FIG. 2 is a cross-sectional view thereof. The joined body 20 illustrated in FIGs. 1 and 2 can be used as, for example, a hermetic terminal.

The joined body 20 includes a metal member including a first metal member 2, which is a tubular body, and a second metal member 4, which is a columnar body, and is joined to an insulating member 6, which is an insulator. The insulating member 6 is located in an inner wall of the tubular body of the first metal member 2 and includes a through hole 5. The second metal member extends through the through hole 5.

The first metal member 2, the second metal member 4, and the insulating member 6 are joined by a joining material 12. The insulating member 6 and the first metal member 2, and the insulating member 6 and the second metal member 4 face each other respectively with gap portions 8a and 8b in between, and at least a part of the joining material 12 is located in the gap portions 8a and 8b. As another aspect, for example, the first metal member 2 and the second metal member 4 may be in contact with the insulating member 6 without at least partially providing the gap portions 8a and 8b. Examples of the joining material 12 include a metal such as a brazing material and glass.

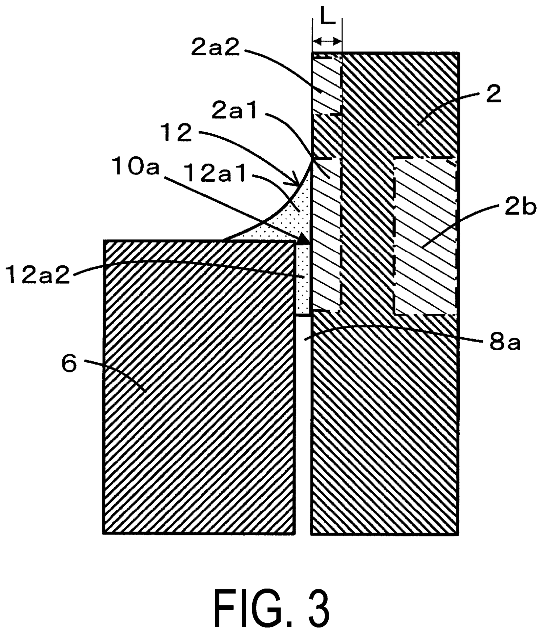

FIG. 3 is an enlarged cross-sectional view of the portion A in FIG. 2. As illustrated in FIG. 3, the joining material 12 that joins the first metal member 2 including the tubular body and the insulating member 6 includes a first extending portion 12a1 and a first filling portion 12a2 that is located in the gap portion 8a. The first extending portion 12a1 has a fillet shape extending in a direction away from the insulating member 6 and in contact with a part of the surface of the first metal member 2 and a part of the surface of the insulating member 6.

A site in contact with the joining material 12 on the surface of the first metal member 2 is defined as a first joining portion 10a. In FIG. 3, the surface of the first metal member 2 at a site in contact with the first extending portion 12a1 and the first filling portion 12a2 is defined as the first joining portion 10a.

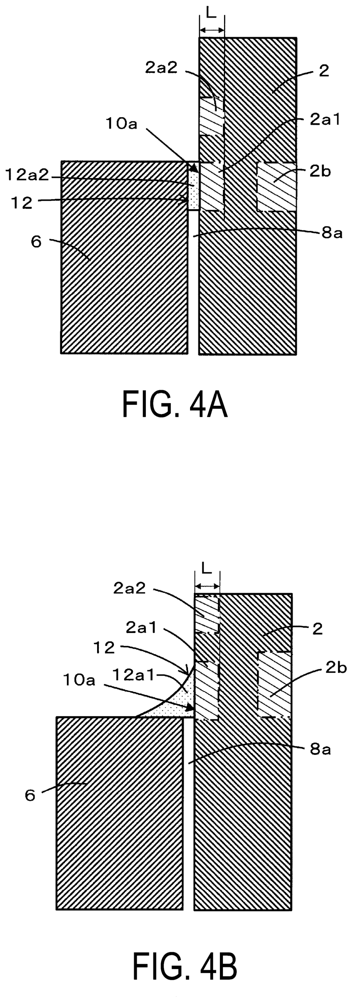

The portion A in FIG. 2 has a form as illustrated not only in FIG. 3 but also in FIGs. 4A and 4B. In FIG. 4A, the joining material 12 includes only the first filling portion 12a2. In FIG. 4B, the joining material 12 includes only the first extending portion 12a1.

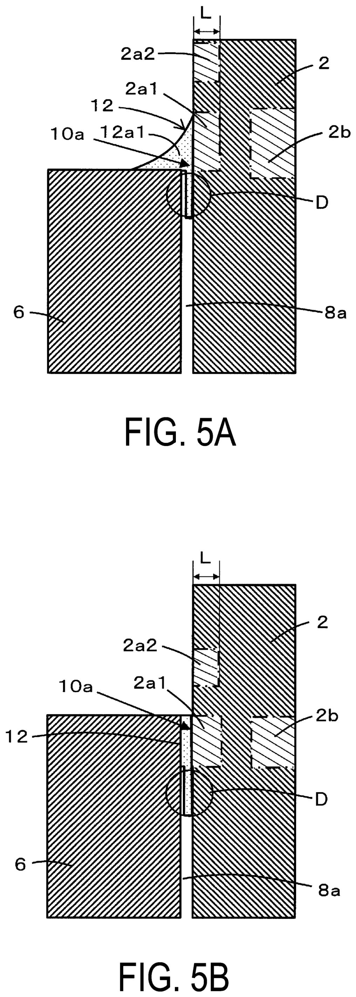

For the first filling portion 12a2, it is necessary that the joining material 12 be in contact with both the first metal member 2 and the insulating member 6 in the gap portion 8a. Being in contact with both means that the joining material 12 exists on a line segment connecting the first metal member 2 and the insulating member 6 at the shortest distance in the gap portion 8a. However, it is assumed that there is no void (closed void in the joining material 12) not in contact with the first metal member 2 or the insulating member 6 on the line segment. As illustrated in FIGs. 5A and 5B, when the joining material 12 is not in contact with the first metal member 2 and/or the insulating member 6 (portion D), the portion D is not the first joining portion 10a. Even when the joining material 12 is in contact with both the first metal member 2 and the insulating member 6, a portion where the joining material 12 does not exist on a line segment connecting the first metal member 2 and the insulating member 6 at the shortest distance in the gap portion 8a is not the first joining portion 10a except for a void.

In the present embodiment, the average crystal grain size of a first surface layer 2a1 of the first metal member 2 at the first joining portion 10a is smaller than the average crystal grain size of a first inner portion 2b of the first metal member 2.

For example, when the average crystal grain size of the first inner portion 2b of the first metal member 2 is Di ($\mu$m) and the average crystal grain size of the first surface layer 2a1 is Ds ($\mu$m), the relationship between both can be expressed as the inequality: Ds ≤ 0.7 Di. That is, it means that the average crystal grain size Ds of the first surface layer 2a1 is 70% or less of the average crystal grain size Di of the first inner portion 2b. They may have a relationship of the inequality: Ds ≤ 0.6 Di.

In this manner, the crystals are refined in the first surface layer 2a1 of the first metal member 2, and thus the mechanical strength is improved. Therefore, for example, when stress (mechanical stress, thermal stress, and the like) is applied to the first metal member 2 from the insulating member 6 via the first joining portion 10a, the occurrence of a crack can be reduced in the first surface layer 2a1 of the inner wall of the tubular body that is the first metal member 2.

Since the average crystal grain size of the first inner portion 2b of the first metal member 2 is relatively large, even if a refined crack occurs in the first surface layer 2a1 of the first metal member 2, the progress of the crack to the inner portion can be reduced, and since the rigidity of the first metal member 2 is high, even when stress is repeatedly applied to the joined body 20, breakage hardly occurs.

The first surface layer 2a1 of the first metal member 2 refers to a region from the surface (inner wall surface) of the first metal member 2 to a depth L of up to 5% with respect to the thickness. For example, when the thickness of the first metal member 2, which is a tubular body, is 0.75 mm, the first surface layer 2a1 refers to a region from the surface to the depth L up to 0.0375 mm in the thickness direction.

The first inner portion 2b of the first metal member 2 refers to a region from the surface (inner wall surface) of the first metal member 2 to a depth of 20% or more and 80% or less with respect to the thickness. For example, when the thickness of the first metal member 2 is 0.75 mm, the first inner portion 2b is a region from the surface to a depth of 0.15 mm or more and 0.6 mm or less in the thickness direction.

The average crystal grain size of a surface layer 2a2 away from the first joining portion 10a of the first metal member 2 is preferably smaller than the average crystal grain size of the first inner portion 2b of the first metal member 2 and larger than the average crystal grain size of the first surface layer 2a1 of the first metal member 2 in contact with the first joining portion 10a.

This can reduce the progress of the crack to the surface layer 2a2 away from the first joining portion 10a while reducing the progress of the crack to the first inner portion 2b. Even when stress is repeatedly applied, breakage of the first metal member 2, which is a tubular body, can be reduced.

A method for specifying the surface layer 2a2 away from the first joining portion 10a will be described later.

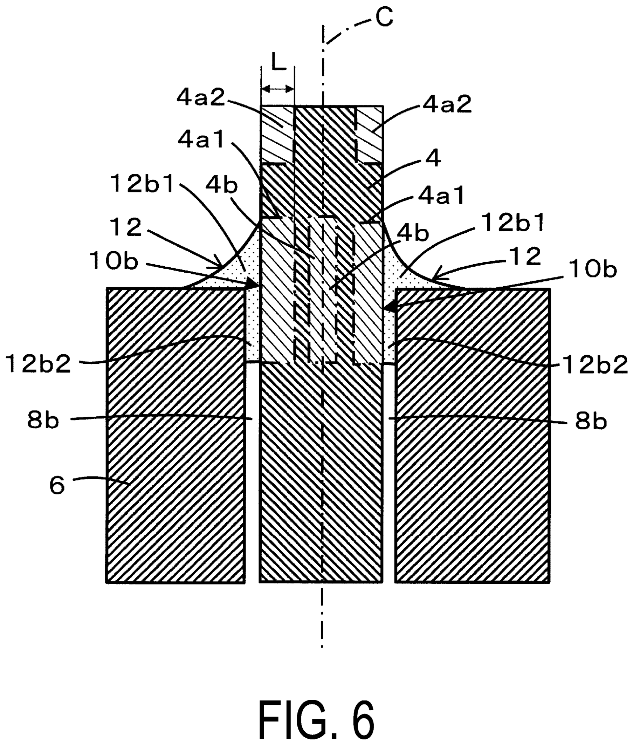

FIG. 6 is an enlarged cross-sectional view of the portion B in FIG. 2. As illustrated in FIG. 6, the joining material 12 that joins the second metal member 4 including the columnar body and the insulating member 6 includes a second extending portion 12b1 having a fillet shape in contact with a part of the surface of the second metal member 4 extending in a direction away from the insulating member 6 and a part of the surface of the insulating member 6, and a second filling portion 12b2 located in the gap portion 8b.

A site in contact with the joining material 12 on the surface of the second metal member 4 is defined as a second joining portion 10b. In FIG. 6, the surface of the second metal member 4 at a site in contact with the second extending portion 12b1 and the second filling portion 12b2 is defined as the second joining portion 10b.

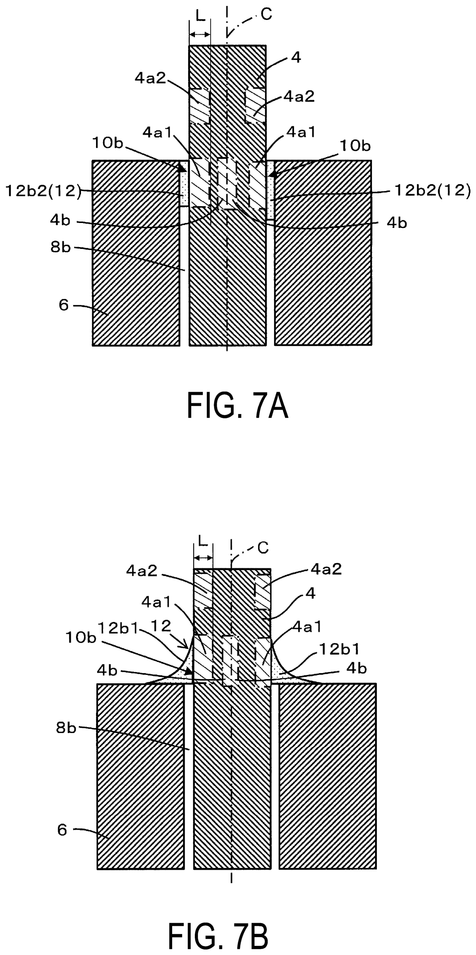

In FIG. 7A, the joining material 12 includes only the second filling portion 12b2. In FIG. 7B, the joining material 12 includes only the second extending portion 12b1.

The second joining portion 10b in contact with the joining material 12 includes not only the form illustrated in FIG. 6 but also the forms illustrated in FIGs. 7A and 7B.

Also, in the joining of the second metal member 4 including the columnar body and the insulating member 6 illustrated in FIGs. 6, 7A, and 7B, the average crystal grain size of a second surface layer 4a1 of the second metal member 4 in the second joining portion 10b is smaller than the average crystal grain size of a second inner portion 4b of the second metal member 4. For example, when the average crystal grain size of the second inner portion 4b of the second metal member 4 is Di ($\mu$m) and the average crystal grain size of the second surface layer 4a1 is Ds ($\mu$m), the relationship between both can be expressed as the inequality: Ds $\leq$ 0.7 Di. It may also be Ds $\leq$ 0.6 Di.

The second surface layer 4a1 of the second metal member 4 refers to a region from the surface of the second metal member 4 to the depth L of up to 5% with respect to the thickness (half of the diameter in the case of a columnar body such as a solid pin). For example, when the second metal member 4 has a diameter of 1.6 mm (radius 0.8 mm), the second surface layer 4a1 is a region from the surface to the depth L of up to 0.04 mm in the radial direction.

The second inner portion 4b of the second metal member 4 refers to a region from the surface of the second metal member 4 to a depth of 20% or more with respect to the thickness in the radial direction (half of the diameter in the case of a columnar body such as a solid pin). For example, when the diameter of the second metal member 4 is 1.6 mm (radius 0.8 mm), the second inner portion 4b is a region deeper than 0.16 mm in the radial direction from the surface. The upper limit of the second inner portion 4b is a center C (axial center) of the second metal member 4.

In the second metal member 4, the average crystal grain size of a surface layer 4a2 away from the second joining portion 10b is smaller than the average crystal grain size of the second inner portion 4b of the second metal member 4 and larger than the average crystal grain size of the second surface layer 4a1 of the second metal member 4 in contact with the second joining portion 10b.

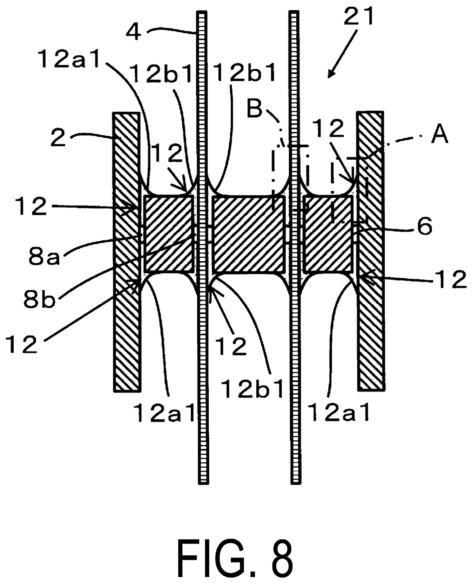

The joined body 20 illustrated in FIG. 2 is joined to the first metal member 2 and the second metal member 4 on one side (upper side) of the insulating member 6, but may be joined to the first metal member 2 and the second metal member 4 on both sides (upper and lower) of the insulating member 6 as in a joined body 21 illustrated in FIG. 8.

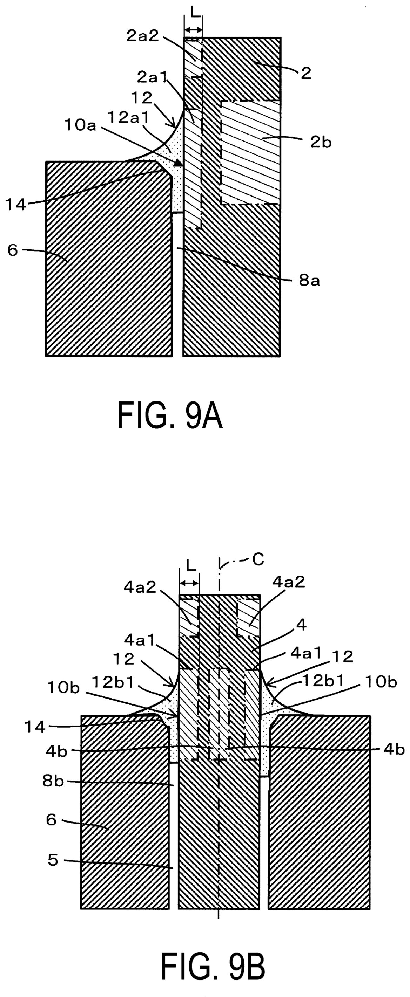

As illustrated in FIGs. 9A and 9B, the insulating member 6 may include a chamfered portion 14 on each of an outer peripheral surface facing the first metal member 2 and an inner wall surface of the through hole 5 through which the second metal member 4 is inserted. The chamfered portion 14 may include a C surface and/or an R surface. In FIGs. 9A and 9B, the chamfered portion 14 is positioned on one side (upper side) of the insulating member 6, but may be located on both sides (upper and lower) of the insulating member 6.

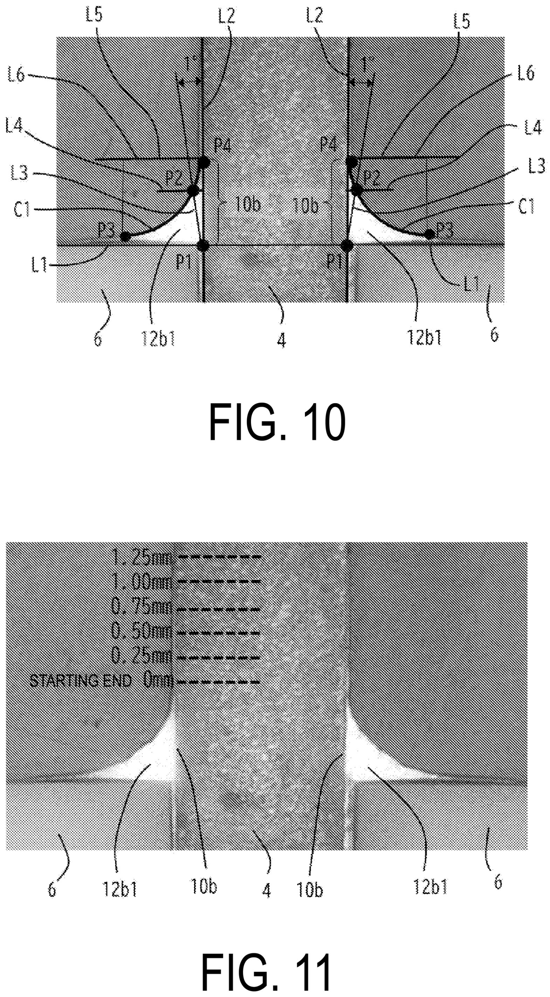

A method for specifying the first extending portion 12a1 and the second extending portion 12b1 will be described with reference to FIG. 10. FIG. 10 is a microscope image illustrating a cross section of the second joining portion 10b in the present disclosure and the periphery thereof. In FIG. 10, the second extending portion 12b1 (second joining portion 10b) will be described as an example, but the first extending portion 12a1 (first joining portion 10a) is also specified by the same method for specifying.

(a) As illustrated in FIG. 10, a first straight line L1 is drawn on the surface of the insulating member 6 and an extension line thereof. The first straight line L1 intersects the second metal member 4.

(b) A second straight line L2 is drawn on the contour of the outer peripheral surface of the second metal member 4. The second straight line L2 intersects the first straight line L1. An intersection point between the first straight line L1 and the second straight line L2 is defined as an origin point P1.

(c) A third straight line L3 having the origin point P1 as a starting point and having an angle of 1° is drawn from the second straight line L2 toward the second extending portion 12b1.

(d) A point at which the third straight line L3 and the contour of the second extending portion 12b1 intersect first is defined as a point P2.

(e) A fourth straight line L4 parallel to the first straight line L1 and passing through the point P2 is drawn.

The second extending portion 12b1 is defined as the joining material 12 located between the first straight line L1 and the fourth straight line L4. The second joining portion 10b in the second extending portion 12b1 is the surface of the second metal member 4 present between the first straight line L1 and the fourth straight line L4. Note that for a reason described later, the second joining portion 10b is illustrated as being present between the first straight line L1 and a fifth straight line L5.

In FIG. 10, since the second extending portions 12b1 are present on both sides of the second metal member 4, the second joining portion 10b is preferably specified for each of the second extending portions 12b1.

The angle between the second straight line L2 and the third straight line L3 is 1° but may be appropriately selected in a range of 0.8° or more and 1.6° or less. Within the range described above, the crystals in the second surface layer 4a1 of the second joining portion 10b are refined. Although the second extending portion 12b1 thinly extends in a direction away from the insulating member 6 through the point P2, it is considered the second extending portion 12b1 does not substantially contribute to joining because of being a thin film. FIG. 10 schematically illustrates a method for specifying the second joining portion 10b for easy understanding, and the point P2 is actually present near a point P4.

Note that when there is an irregular protruding portion or a bulging portion in the second extending portion 12b1 (particularly, the end portion thereof), the protruding portion or the bulging portion is preferably not considered when the second extending portion 12b1 is specified.

When specification of the second joining portion 10b by the method for specifying described above is difficult, a portion having a thickness of 15 μm or more in the extending portion may be defined as the second extending portion 12b1. In FIG. 10, the extending portion of the portion above the fifth straight line L5 parallel to the first straight line L1 has a thickness of less than 15 μm, and it is considered the extending portion does not substantially contribute to joining.

If specification of the second joining portion 10b by any of the above methods is difficult, it may be specified using an arc cross-sectional shape of the second extending portion 12b1. In the cross-sectional view illustrated in FIG. 10, an arc C1 is drawn as much as possible along the contour of the second extending portion 12b1. The expression "as much as possible along" means that the difference between the arc C1 and the contour of the second extending portion 12b1 becomes the smallest. The difference between the arc C1 and the contour of the second extending portion 12b1 is determined as follows, for example. A straight line from the center of the arc C1 toward the arc C1 is drawn to specify each of an intersection point E between the straight line and the arc C1 and an intersection point F between the straight line and the contour of the second extending portion 12b1. With the direction from the center of the arc C1 toward the arc C1 as a positive direction, the length of the straight line from the intersection point E to the intersection point F is defined as a difference between the arc C1 and the contour of the second extending portion 21b. For example, nine straight lines that divide the arc C1 into nine equal parts are drawn from the center of the arc C1, a difference between the arc C1 and the contour of the second extending portion 12b1 is determined in each of the straight lines, and a state in which the sum of the differences is the smallest is defined as the smallest difference between the arc C1 and the second extending portion 12b1. The number of equal divisions of the arc C1 may be appropriately adjusted depending on the shape of the second extending portion 21b. The peripheral length of the arc C1 is assumed to be 1/4 of the circumference. The arc C1 has a point P3 and the point P4 at both ends, respectively. The point P4 of the arc C1 is the closest point to the second metal member 4. A sixth straight line L6 passing through the point P4 of the arc C1 and parallel to the first straight line L1 is drawn (in FIG. 10, it overlaps with the fifth straight line L5). At this time, the second joining portion 10b is a site present between the first straight line L1 and the sixth straight line L6.

The first extending portion 12a1 is also specified by the same method for specifying.

A method for specifying the surface layer 4a2 away from the second joining portion 10b will be described with reference to FIG. 11.

(1) The upper end of the second joining portion 10b is defined as a starting end (0 mm). The average crystal grain size of the surface layer of the second metal member 4 and the average crystal grain size of the second inner portion 4b are measured at the starting end portion and a plurality of portions (e.g., a plurality of portions at intervals of 0.25 mm, as illustrated in FIG. 11) away from the starting end along the surface of the second metal member 4.

(2) The refinement ratio (%) of the crystal is calculated by the following formula.

Formula: refinement ratio (%) = {(average crystal grain size of surface layer)/(average crystal grain size of inner portion)} × 100

The calculation results are shown in Table 1. The surface layer and the inner portion are as described above.

Table 1

| DISTANCE FROM JOINING PORTION (mm) | AVERAGE CRYSTAL GRAIN SIZE (μm) | | REFINEMENT RATIO (%) |
| --- | --- | --- | --- |
| | SURFACE LAYER | INNER PORTION | |
| 0.00 | 10.0 | 14.7 | 68% |
| 0.25 | 10.3 | 13.2 | 78% |
| 0.50 | 10.4 | 13.4 | 77% |
| 0.75 | 12.2 | 12.8 | 95% |
| 1.00 | 11.1 | 13.0 | 85% |
| 1.25 | 11.7 | 13.8 | 85% |

The measurement interval is not limited to 0.25 mm, and can be appropriately changed.

(3) From Table 1 above, a region away from the starting end (0 mm), having a larger refinement ratio (%) than the starting end, and having a value of the refinement ratio (%) exceeding 80% (i.e., a region including measurement positions of 0.75 mm, 1.00 mm, and 1.25 mm) is defined as the surface layer 4a2 away from the second joining portion 10b.

The surface layer 2a2 away from the first joining portion 10a can be specified by the same method for specifying as the surface layer 4a2 away from the second joining portion 10b.

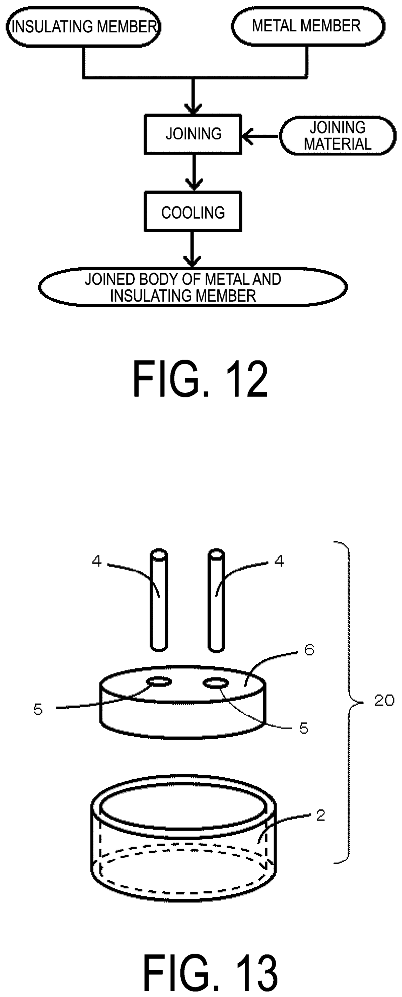

A method for producing the joined body 20 illustrated in FIGs. 1 and 2 will be described. FIG. 12 is a flowchart showing the method for producing, and FIG. 13 is an exploded view illustrating the method for assembling each member.

As shown in FIG. 12, in producing the joined body of the present disclosure, the insulating member 6, which is an insulator serving as a raw material, a metal member (first metal member 2 and second metal member 4), and the joining material 12 containing metal or glass are prepared (preparing).

The insulator refers to an insulation material having a volume resistivity at 20°C of $10^{10}$ $\Omega \cdot$ m or more.

The insulating member 6 preferably contains, for example, any of alumina, zirconia, silicon nitride, silicon carbide, forsterite, cordierite, and sapphire as a main component. Among these insulating members 6, a ceramic material is inexpensive and excellent in mechanical strength, and sapphire is excellent in light permeability.

The main component in the insulating member refers to a component that accounts for 60 mass% or more of the total 100 mass% of the components constituting the insulating member. In particular, the main component preferably accounts for 95 mass% or more of the total 100 mass% of the components constituting the insulating member. The component constituting the insulating member may be determined using an X-ray diffractometer (XRD). For the content of each component, after the component is identified, a content of an element constituting the component may be determined using an X-ray fluorescence analyzer (XRF) or an ICP emission spectrophotometer and may be converted into the identified component.

In order to reduce the residual stress generated by joining with the insulating member 6, the first metal member 2 and the second metal member 4 preferably contain Fe, Ni, and Co in order to reduce the thermal expansion coefficient, and the total content of Fe, Ni, and Co is preferably 99 mass% or more. This can reduce cracking of the first metal member 2 and the second metal member 4. In this case, the insulating member 6 may have alumina having a thermal expansion coefficient approximate to those of the first metal member 2 and the second metal member 4 as a main component. In the first metal member 2 and the second metal member 4, Fe content is preferably 40 mass% or more and 56 mass% or less, Ni content is preferably 25 mass% or more and 40 mass% or less, and Co content is preferably 10 mass% or more and 30 mass% or less. Fe content is preferably 50 mass% or more and 56 mass% or less, Ni content is preferably 26 mass% or more and 33 mass% or less, and Co content is preferably 14 mass% or more and 20 mass% or less.

Specifically, the first metal member 2 may be an Fe-Ni alloy such as Invar 36 (Fe content of 54 mass% and Ni content of 36 mass%) or an Fe-Ni-Co alloy such as Kovar (Fe content of 53 mass%, Ni content of 29 mass%, and Co content of 17 mass%).

The second metal member 4 having a columnar shape may be a metal having the same composition as that of the first metal member 2 described above. The second metal member 4 may be a metal different from the first metal member 2, for example, copper (Cu), an alloy containing Cu as a main component, or the like.

The first metal member 2 may be Cu or an alloy whose main component is Cu, and the second metal member 4 may be an alloy such as Kovar or Invar 36.

The joining material 12 preferably contains a metal such as a brazing material or glass.

As an example of the combination in the present disclosure, the first metal member 2 and/or the second metal member 4 preferably contains a composition in which Fe content is 40 mass% or more and 56 mass% or less, Ni content is 25 mass% or more and 40 mass% or less, and Co content is 10 mass% or more and 30 mass% or less, the insulating member 6 preferably contains alumina, and the joining material 12 preferably contains a brazing material containing Ag and Cu and having a total content of Ag and Cu of 90 mass% or more.

After the preparing, as illustrated in FIG. 13, the second metal member 4 having a columnar shape is inserted into the through hole 5 of the insulating member 6, and the insulating member 6 is inserted into the first metal member 2 having a tubular shape. An assembly is obtained by disposing the joining material 12 on any one of a facing surface between the insulating member 6 and at least the first metal member 2 and at least one surface of the insulating member 6 in the vicinity of the facing surface, and on any one of a facing surface between the insulating member 6 and at least the second metal member 4 and at least one surface of the insulating member 6 in the vicinity of the facing surface (assembling).

The assembly is heated in vacuum or an inert gas to melt the joining material 12, and then cooled to 200°C or less to solidify the joining material 12. This provides a pre-joined body in which the insulating member 6 and the first metal member 2, and the insulating member 6 and the second metal member 4 are joined (joining).

Before the joining material 12 is disposed, a metallization layer may be formed on the insulating member 6 in advance. Examples of the metallization layer include a Mo-Mn-based metallization layer. After the metallization layer is formed, a plating layer may be formed on the metallization layer. The plating layer includes Ni plating. Regardless of whether or not the metallization layer is formed, a plating layer may be formed on at least any one of at least the inner wall surface of at least the first metal member 2 and at least the outer peripheral surface of the second metal member 4. The plating layer includes Ni plating.

The obtained pre-joined body is cooled at an ambient temperature of -100°C or less to obtain the joined body 20 (cooling). Subjecting the pre-joined body to a cooling treatment can refine crystals of portions of the first metal member 2 and the second metal member 4 in contact with the joining portion (i.e., the portions of the first surface layer 2a1 and the second surface layer 4a1). When the crystal of metal is refined, the mechanical strength is improved at the refined portion, the occurrence of a crack in the first joining portion 10a and the second joining portion 10b is reduced, the mechanical strength of the joined body 20 of the metal and the ceramic, which is an insulator, is improved, and breakage can be reduced.

The cooling can be performed by immersion in a cooling liquid at -100°C or less, for example. Examples of the cooling liquid include liquid oxygen (boiling point -183°C), liquid nitrogen (boiling point -196°C), liquid hydrogen (boiling point -253°C), and liquid helium (boiling point -269°C). The immersion time is 1 minute or more, and may be 10 minutes or more. The pre-joined body may be cooled to -100°C or less not in a liquid but in a gas atmosphere having an ambient temperature of -100°C or less. Increasing the immersion time can reduce the average crystal grain sizes of the first surface layer 2a1 and the second surface layer 4a1. The immersion time may be appropriately adjusted so as to obtain a desired average crystal grain size.

In the joined body 20 of the present disclosure, not the entire metal but metal crystals of the first surface layer 2a1 and the second surface layer 4a1 of the first joining portion 10a and the second joining portion 10b are refined more than other portions. This is because residual stress occurs due to joining in the first surface layer 2a1 and the second surface layer 4a1 of the first joining portion 10a and the second joining portion 10b.

The joined body of the present disclosure can be used as an electromagnetic wave permeable window member that introduces an electromagnetic wave into a semiconductor manufacturing device or outputs a high-frequency wave of an accelerator. This window member includes the first metal member 2 having a tubular shape, and has a structure in which the outer peripheral surface of the insulating member 6 is joined to the inner wall surface of the first metal member 2. The second metal member 4 including the columnar body described above is not necessarily required. The insulating member 6 to be used preferably contains any of alumina, zirconia, silicon nitride, silicon carbide, forsterite, cordierite, and sapphire as a main component.

When the insulating member 6 is sapphire, the electromagnetic wave permeable window member can also be used as an inspection window. The inspection window is used as a window for visually checking the inner portion of, for example, a container, piping, and equipment such as a semiconductor manufacturing device and a furnace.

The joined body of the present disclosure can also be used as a power feeding terminal. The power feeding terminal is used as a power feeding terminal for introducing, into equipment, a large current of 100 A or more, for example. This power feeding terminal includes the second metal member 4 including a columnar body, and the insulating member 6 including the through hole 5 through which the second metal member 4 penetrates. The first metal member 2 having the tubular shape is not necessarily required.

The joined body of the present disclosure can also be used as a hermetic terminal in which high hermeticity is required in the power feeding terminal. The hermetic terminal is used as, for example, a power feeding terminal for introducing a current into a vacuum container from the outside, a signal terminal for transmitting, to the outside, a signal of a sensor provided in an inner portion of a container, piping, equipment, or the like requiring hermeticity, or the like. In this hermetic terminal, as illustrated in FIGs. 1, 2, and 8, the insulating member 6 is located in the inner wall of the tubular body of the first metal member 2, and includes the through hole 5 through which the second metal member 4 having a columnar shape penetrates.

In the joined bodies 20 and 21 used for the hermetic terminal, the first metal member 2 and the second metal member 4 preferably contain a composition in which Fe content is 40 mass% or more and 56 mass% or less, Ni content is 25 mass% or more and 40 mass% or less, and Co content is 10 mass% or more and 30 mass% or less, the insulating member 6 preferably contains alumina, and the joining material 12 preferably contains a brazing material containing Ag and Cu and having a total content of Ag and Cu of 90 mass% or more.

By this, the hermeticity between the tubular body that is the first metal member 2 and the insulating member 6 and between the columnar body that is the second metal member 4 and the insulating member 6 is excellent, and the joining strength therebetween is also excellent. This is because the thermal expansion coefficients of the first metal member 2, the second metal member 4, and the insulating member 6 approximate to each other, and the wettability of the joining material 12 is good. Therefore, even when stress is applied, cracking is less likely to occur in the first metal member 2 and the second metal member 4.

The hermetic terminal is excellent in hermeticity even when used in an environment of -100°C or less, and can reduce cracking of the first metal member 2, the second metal member 4, and the insulating member 6 constituting the hermetic terminal.

Next, refinement of the crystal will be described in detail with reference to examples.

Example 1

The joined body 21 having the cross-sectional structure illustrated in FIG. 8 was fabricated, and refinement of the crystal in the first joining portion 10a (see FIG. 9A) of the first metal member 2 having a tubular shape was examined. The respective members constituting the joined body 21 are as follows.

First metal member 2: Tubular body (sleeve) having a thickness of 0.75 mm fabricated from an Fe-Ni-Co alloy (Kovar containing Fe content of 53 mass%, Ni content of 29 mass%, and Co content of 17 mass%).

Second metal member 4: Columnar body (pin) having a diameter of 1.6 mm fabricated from the same Fe-Ni-Co alloy as that of the first metal member 2.

Insulating member 6: Sintered body containing 99.5 mass% of alumina, and including two through holes 5 through which the second metal member 4 is inserted.

Joining material 12: Brazing material containing Ag and Cu and having a total content of Ag and Cu of 90 mass% or more.

After assembly, the joined body 21 was immersed for 10 minutes in liquid nitrogen at -100°C or less.

The joined body 21 subjected to the low-temperature treatment in this manner is embedded in a resin and then cut with a diamond cutter. The cut surface was subjected to a rough polishing treatment with a diamond disk, subjected to a buff polishing treatment using diamond abrasive grains, and then subjected to a buff polishing treatment using silica abrasive grains. This brings the polished surface into a mirror surface state. The polished surface is appropriately chemically polished with a 5% nitric acid-ethanol mixed solution, aqua regia (liquid in which concentrated nitric acid and concentrated hydrochloric acid are mixed in a volume ratio of 3:1), or the like. In place of chemical polishing, physical polishing may be appropriately performed by focused ion beam (FIB) machining, ion milling machining, or the like. This makes it easy to observe a crystal grain boundary of the metal. The cross section of a sample treated in this manner was captured with a microscope (VHX-5000 produced by KEYENCE CORPORATION, magnification of 1500 times).

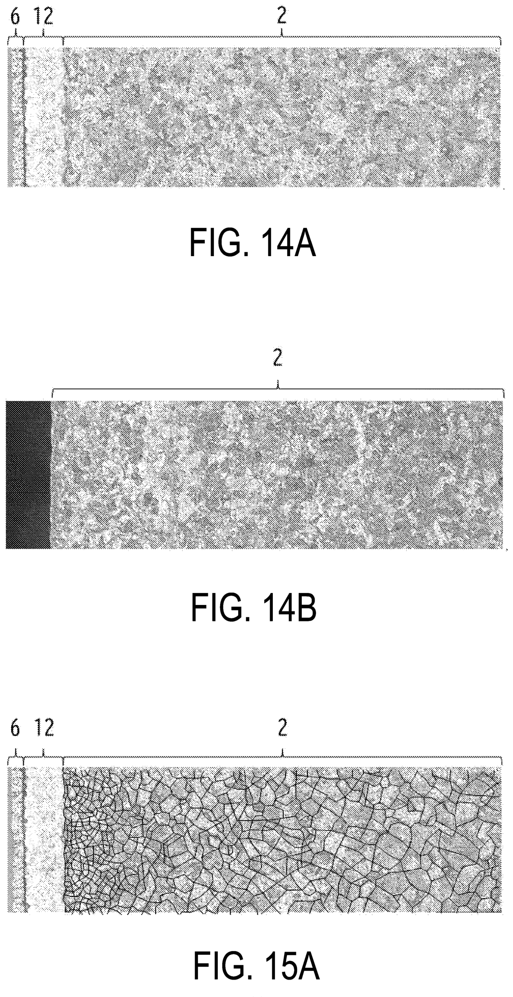

FIGs. 14A and 14B are microscope images capturing the crystal shape of a cross section of the tubular body that is the first metal member 2, FIG. 14A illustrates the crystal shape from the first surface layer 2a1 to the first inner portion 2b of the first metal member 2 at the first joining portion 10a, and FIG. 14B illustrates the crystal shape from the surface layer 2a2 to the inner portion of the first metal member 2 at a position (normal portion) away from the first joining portion 10a. In FIGs. 14A and 14B, the lateral direction indicates the depth direction from the surface of the first metal member 2, and the longitudinal direction (i.e., the direction along the surface of the first metal member 2) indicates the measurement direction of the average crystal grain size.

The normal portion is the position 1 mm away from the surface of the insulating member 6 joined to the first metal member 2.

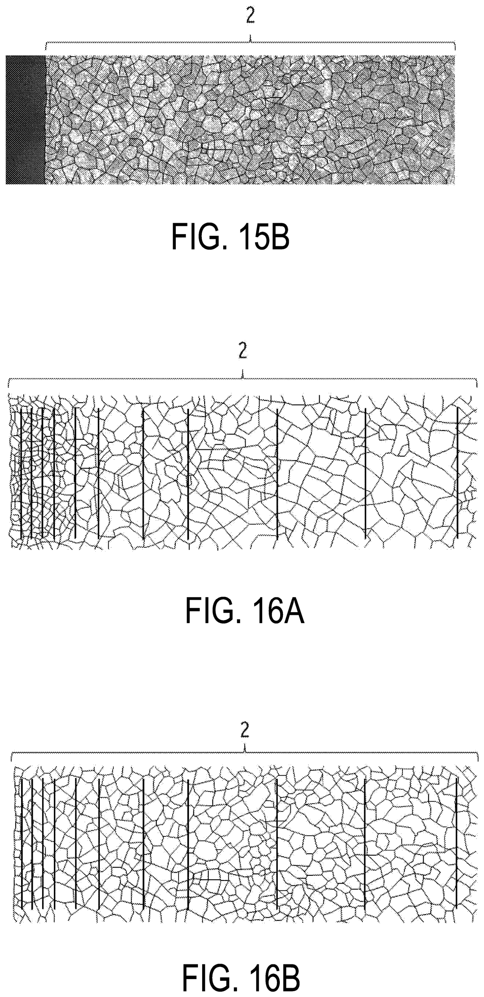

FIGs. 15A and 15B are microscope images tracing the crystal shapes illustrated in FIGs. 14A and 14B, respectively. That is, FIGs. 15A and 15B were created by importing electronic data of the microscope images illustrated in FIGs. 14A and 14B into Power Point (trademark of Microsoft Corporation), and tracing the contour of the crystal using a drawing tool. The microscope image may be printed, thin paper may be superimposed on the surface, and the contour of the crystal may be traced on the thin paper.

FIGs. 16A and 16B are views illustrating the trace of the crystal shapes illustrated in FIGs. 15A and 15B, respectively.

The measurement position of the average crystal grain size is represented by a distance d ($\mu$m) in the depth direction from the surface and the percentage (%) thereof. The percentage (%) in the depth direction is calculated from the expression: (d/0.75) $\times$ 100 with the thickness of 0.75 mm of the first metal member 2 being 100%. The measurement positions indicated by percentages (%) in the depth direction were arbitrarily set to 1.6%, 3.2%, 5.0%, 7.5%, 10%, 15%, 20%, 30%, 40%, 50%, and 65%. These measurement positions are indicated by vertical lines parallel to the measurement direction of the average crystal grain size on the traces of FIGs. 16A and 16B.

A straight line of 150 $\mu$m is drawn along the measurement direction of the average crystal grain size at each measurement position on the traces of FIGs. 16A and 16B. The total number of points where this straight line intersects the crystal grain boundary with 1 subtracted is defined as the crystal count number. The number in which the length 150 $\mu$m of the straight line divided by the crystal count number is defined as the average crystal grain size.

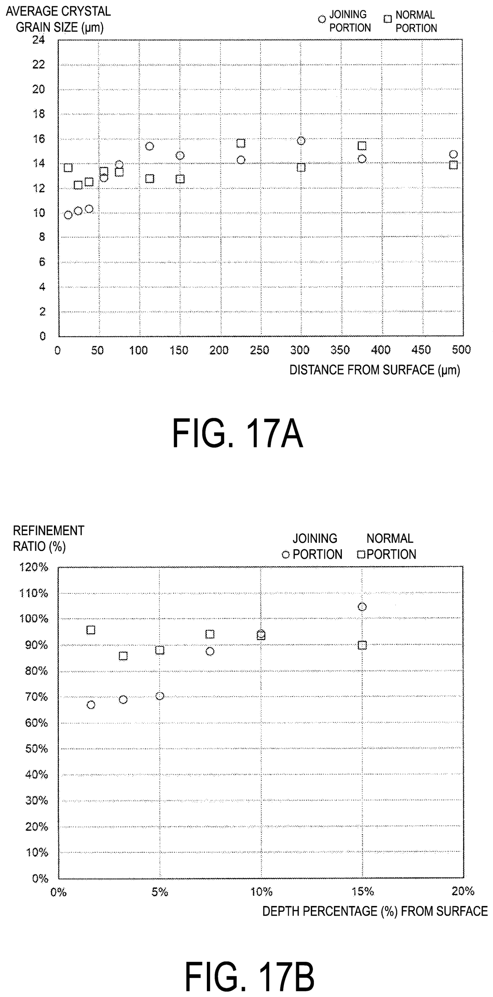

The measurement location of the average crystal grain size will be described. FIG. 8 illustrates four first extending portions 12a1 that join the right and left first metal members 2 and the insulating member 6. The measurement locations are four locations of the first joining portion 10a of the site in contact with each of the first extending portions 12a1 and four locations of the normal portion away from the respective first joining portions 10a. The average crystal grain size was an average value of the average crystal grain sizes of the four locations at each measurement position. The results are shown in Table 2 and FIG. 17A. The graph of FIG. 17A shows the change in the average crystal grain size with respect to the distance ($\mu$m) from the surface, that is, the distance ($\mu$m) in the depth direction from the surface.

Table 2

| MEASUREMENT LOCATION | | AVERAGE CRYSTAL GRAIN SIZE ($\mu$m) (MEASUREMENT POSITION: DISTANCE ($\mu$m) FROM SURFACE DEPTH PERCENTAGE (%) FROM SURFACE) | | | | | | | | | | |
|---|---|---|---|---|---|---|---|---|---|---|---|---|
| | | 12 1.6% | 24 3.2% | 37.5 5.0% | 56 7.5% | 75 10% | 112.5 15% | 150 20% | 225 30% | 300 40% | 375 50% | 488 65% |
| JOINING PORTION | (1) | 9.4 | 10.7 | 10.0 | 10.7 | 15.0 | 15.0 | 15.0 | 15.0 | 16.7 | 16.7 | 16.7 |
| | (2) | 9.4 | 10.0 | 10.7 | 13.6 | 13.6 | 15.0 | 15.0 | 15.0 | 15.0 | 13.6 | 13.6 |
| | (3) | 10.7 | 10.7 | 9.4 | 13.6 | 13.6 | 16.7 | 15.0 | 13.6 | 15.0 | 13.6 | 15.0 |
| | (4) | 10.0 | 9.4 | 11.4 | 13.6 | 13.6 | 15.0 | 13.6 | 13.6 | 16.7 | 13.6 | 13.6 |
| | AVERAGE | 9.9 | 10.2 | 10.4 | 12.9 | 14.0 | 15.4 | 14.7 | 14.3 | 15.9 | 14.4 | 14.7 |
| NORMAL PORTION | (1) | 13.6 | 12.5 | 11.5 | 12.5 | 13.6 | 12.5 | 12.5 | 18.8 | 13.6 | 15.0 | 16.7 |
| | (2) | 13.6 | 11.5 | 12.5 | 12.5 | 13.6 | 13.6 | 12.5 | 13.6 | 13.6 | 15.0 | 13.6 |
| | (3) | 15.0 | 13.6 | 12.5 | 13.6 | 12.5 | 13.6 | 13.6 | 13.6 | 15.0 | 16.7 | 13.6 |
| | (4) | 12.5 | 11.5 | 13.6 | 15.0 | 13.6 | 11.5 | 12.5 | 16.7 | 12.5 | 15.0 | 11.5 |
| | AVERAGE | 13.7 | 12.3 | 12.5 | 13.4 | 13.3 | 12.8 | 12.8 | 15.7 | 13.7 | 15.4 | 13.9 |

In Table 3, based on the measurement results in Table 2, the refinement ratio of the crystal was determined from the average crystal grain size at each measurement position from the surface of the first metal member 2 to a depth of 15% and the average grain size of the inner portion (region of 20% or more and 65% or less of the depth from the surface). The refinement ratio of the crystal is calculated by the following formula.

Formula: refinement ratio (%) = {(average crystal grain size at each measurement position)/(average crystal grain size of inner portion)} $\times$ 100

The graph of FIG. 17B shows the change in the refinement ratio of the crystal with respect to the depth percentage (%) from the surface.

Table 3

| MEASUREMENT LOCATION | | REFINEMENT RATIO (%) <br> (MEASUREMENT POSITION: DISTANCE (μm) FROM SURFACE <br> DEPTH PERCENTAGE (%) FROM SURFACE) | | | | | |
|---|---|---|---|---|---|---|---|
| | | 12 <br> 1.6% | 24 <br> 3.2% | 37.5 <br> 5.0% | 56 <br> 7.5% | 75 <br> 10% | 112.5 <br> 15% |
| JOINING PORTION | (1) | 59% | 67% | 62% | 67% | 94% | 94% |
| | (2) | 65% | 69% | 74% | 94% | 94% | 104% |
| | (3) | 74% | 74% | 65% | 94% | 94% | 116% |
| | (4) | 70% | 66% | 80% | 96% | 96% | 105% |
| | AVERAGE | 67% | 69% | 70% | 88% | 94% | 105% |
| NORMAL PORTION | (1) | 89% | 82% | 75% | 82% | 89% | 82% |
| | (2) | 100% | 84% | 92% | 92% | 100% | 100% |
| | (3) | 103% | 94% | 86% | 94% | 86% | 94% |
| | (4) | 92% | 84% | 100% | 110% | 100% | 84% |
| | AVERAGE | 96% | 86% | 88% | 94% | 94% | 90% |

In Table 4, based on the measurement results in Table 2, the refinement ratio of the crystal was determined from the average crystal grain size of the surface layer (region from the surface to a depth of 5%) of the first metal member 2 and the average crystal grain size of the inner portion (region where the depth from the surface is 20% or more and 65% or less). The refinement ratio of the crystal is calculated by the following formula.

Formula: refinement ratio (%) = {(average crystal grain size of surface layer)/(average crystal grain size of inner portion)} $\times$ 100

Table 4

| WITH LOW-TEMPERATURE TREATMENT | AVERAGE CRYSTAL GRAIN SIZE (μm) | | **REFINEMENT** RATIO (%) |
|---|---|---|---|
| | SURFACE LAYER | INNER PORTION | |
| JOINING PORTION | 10.2 | 14.8 | 69% |
| NORMAL PORTION | 12.8 | 14.3 | 90% |

As apparent from Table 4, the first surface layer 2a1 of the first joining portion 10a is smaller in terms of the average crystal grain size than the first inner portion 2b. The surface layer of the normal portion is also smaller in terms of the average crystal grain size than the inner portion, but is larger in terms of the average crystal grain size than the first surface layer 2a1 of the first joining portion 10a. The normal portion had a refinement ratio of the crystal of 90%, which was hardly refined, whereas the first surface layer 2a1 of the first joining portion 10a had a refinement ratio of 69%.

Example 2

Using the joined body 21 used in Example 1, the refinement of the crystal in the second joining portion 10b (see FIG. 9B) of the second metal member 4 having a columnar shape joined to the insulating member 6 was examined.

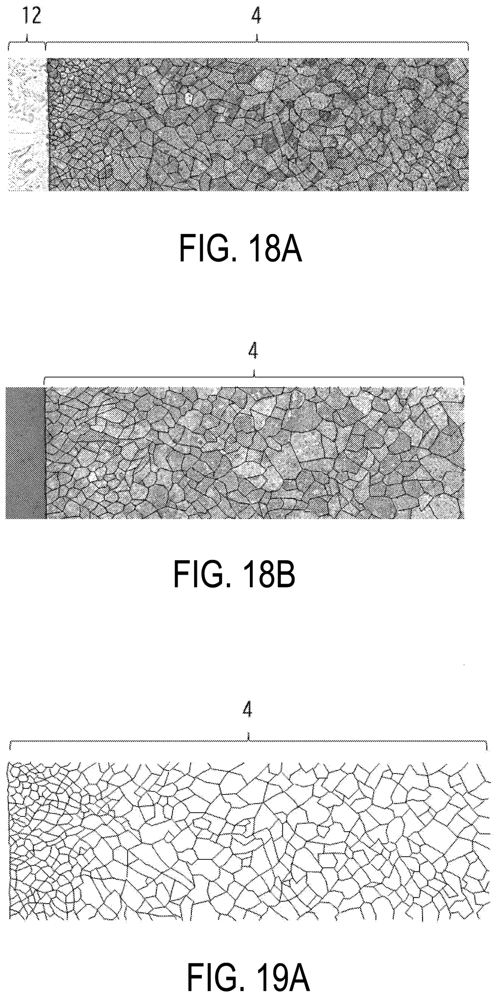

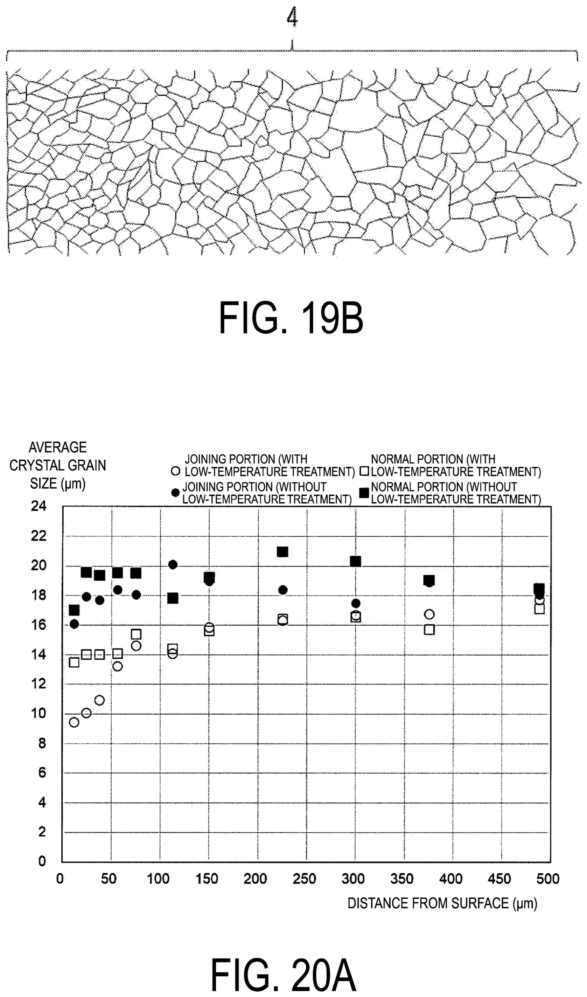

FIGs. 18A and 18B are microscope images capturing the crystal shape of a cross section of the columnar body (pin) that is the second metal member 4, FIG. 18A illustrates the crystal shape from the second surface layer 4a1 to the second inner portion 4b of the second metal member 4 at the second joining portion 10b, and FIG. 18B illustrates the crystal shape from the surface layer 4a2 to the inner portion of the second metal member 4 at a position (normal portion) away from the second joining portion 10b. In these figures, the crystal shape is traced. FIGs. 19A and 19B are views illustrating the trace of the crystal shapes illustrated in FIGs. 18A and 18B, respectively.
The measurement location of the average crystal grain size will be described. FIG. 8 illustrates eight second extending portions 12b1 that join the right and left second metal members 4 and the insulating member 6. The measurement locations are four locations of the second joining portions 10b of the site in contact with two second extending portions 12b1 that join the left second metal member 4 and the upper surface of the insulating member 6 and the two second extending portions 12b1 that join the right second metal member 4 and the lower surface of the insulating member 6, and four locations of the normal portion away from the respective second joining portions 10b. The average crystal grain size was an average value of the average crystal grain sizes of the four locations at each measurement position. Regarding the others, the test was conducted in the same method as in Example 1. The results are shown in Table 5.
For the average crystal grain size of the second joining portion 10b and the normal portion away therefrom in the joined body not subjected to the low-temperature treatment was also tested by the same method. The results are shown in Table 6.
The graph of FIG. 20A shows the results of Table 5 and 6, and shows the change in the average crystal grain size with resprect to the distance (μm) from the surface.

Table 5

| MEASUREMENT LOCATION | | AVERAGE CRYSTAL GRAIN SIZE (μm) (MEASUREMENT POSITION: DISTANCE (μm) FROM SURFACE DEPTH PERCENTAGE (%) FROM SURFACE) | | | | | | | | | | |
|---|---|---|---|---|---|---|---|---|---|---|---|---|
| | | 12.8 1.6% | 25.6 3.2% | 40 5.0% | 60 7.5% | 80 10% | 120 15% | 160 20% | 240 30% | 320 40% | 400 50% | 520 65% |
| JOINING PORTION | (1) | 10.0 | 10.0 | 10.7 | 13.6 | 16.7 | 13.6 | 18.8 | 18.8 | 17.6 | 17.0 | 18.8 |
| | (2) | 8.3 | 9.8 | 10.7 | 12.5 | 13.6 | 13.6 | 15.2 | 15.6 | 15.8 | 16.5 | 16.7 |
| | (3) | 9.4 | 10.3 | 10.8 | 13.2 | 14.6 | 14.1 | 15.9 | 16.3 | 16.7 | 17.3 | 17.2 |
| | (4) | 10.0 | 10.4 | 11.4 | 13.6 | 13.6 | 15.0 | 13.6 | 14.6 | 16.7 | 16.8 | 17.7 |
| | AVERAGE | 9.4 | 10.1 | 10.9 | 13.2 | 14.6 | 14.1 | 15.9 | 16.3 | 16.7 | 16.9 | 17.6 |
| NORMAL PORTION | (1) | 12.5 | 13.6 | 13.6 | 13.6 | 15.0 | 15.0 | 18.8 | 16.7 | 18.8 | 16.7 | 18.8 |
| | (2) | 15.0 | 15.0 | 15.0 | 13.6 | 15.0 | 13.6 | 18.8 | 16.7 | 18.9 | 18.8 | 18.5 |
| | (3) | 11.5 | 12.5 | 12.5 | 16.7 | 15.0 | 12.5 | 12.5 | 18.8 | 13.6 | 12.5 | 13.6 |
| | (4) | 15.0 | 15.0 | 15.0 | 12.5 | 16.7 | 16.7 | 12.5 | 13.6 | 15.0 | 15.0 | 16.6 |
| | AVERAGE | 13.5 | 14.0 | 14.0 | 14.1 | 15.4 | 14.5 | 15.6 | 16.4 | 16.6 | 15.7 | 16.9 |

[Table 6]

| MEASUREMENT LOCATION | | AVERAGE CRYSTAL GRAIN SIZE (μm) (MEASUREMENT POSITION: DISTANCE (μm) FROM SURFACE DEPTH PERCENTAGE (%) FROM SURFACE) | | | | | | | | | | |
|---|---|---|---|---|---|---|---|---|---|---|---|---|
| | | 12.8 1.6% | 25.6 3.2% | 40 5.0% | 60 7.5% | 80 10% | 120 15% | 160 20% | 240 30% | 320 40% | 400 50% | 520 65% |
| JOINING PORTION | (1) | 16.7 | 20.4 | 19.8 | 21.4 | 18.8 | 18.8 | 16.7 | 18.8 | 18.8 | 16.7 | 18.8 |
| | (2) | 16.7 | 16.7 | 16.7 | 18.8 | 18.8 | 22.9 | 18.8 | 21.4 | 18.8 | 25.0 | 16.7 |
| | (3) | 16.1 | 17.7 | 17.9 | 18.4 | 18.1 | 19.8 | 18.4 | 18.4 | 18.0 | 18.9 | 18.1 |
| | (4) | 15.0 | 16.7 | 16.7 | 15.0 | 16.7 | 18.8 | 21.4 | 15.0 | 15.0 | 15.0 | 18.8 |
| | AVERAGE | 16.1 | 17.9 | 17.7 | 18.4 | 18.1 | 20.1 | 18.8 | 18.4 | 17.6 | 18.9 | 18.1 |
| NORMAL PORTION | (1) | 21.4 | 21.4 | 21.4 | 21.4 | 21.4 | 18.8 | 25.0 | 25.0 | 25.0 | 21.4 | 21.4 |
| | (2) | 15.0 | 18.8 | 18.8 | 18.8 | 15.0 | 15.0 | 16.7 | 21.4 | 18.8 | 16.7 | 15.0 |
| | (3) | 15.0 | 18.8 | 18.8 | 16.7 | 25.0 | 18.8 | 18.8 | 18.8 | 18.8 | 21.4 | 18.8 |
| | (4) | 16.7 | 19.4 | 18.7 | 21.4 | 16.7 | 18.8 | 16.7 | 18.8 | 18.8 | 16.7 | 18.8 |
| | AVERAGE | 17.0 | 19.6 | 19.4 | 19.6 | 19.5 | 17.8 | 19.3 | 21.0 | 20.3 | 19.0 | 18.5 |

In Table 7 and 8, based on the measurement results in Table 5 and 6, respectively, the refinement ratio of the crystal was determined from the average crystal grain size at each measurement position from the surface of the second metal member 4 to a depth of 15% and the average crystal grain size of the inner portion (region of 20% or more and 65% or less of the depth from the surface). The refinement ratio of the crystal is calculated by the following formula.

Formula: refinement ratio (%) = {(average crystal grain size at each measurement position)/(average crystal grain size of inner portion)} × 100

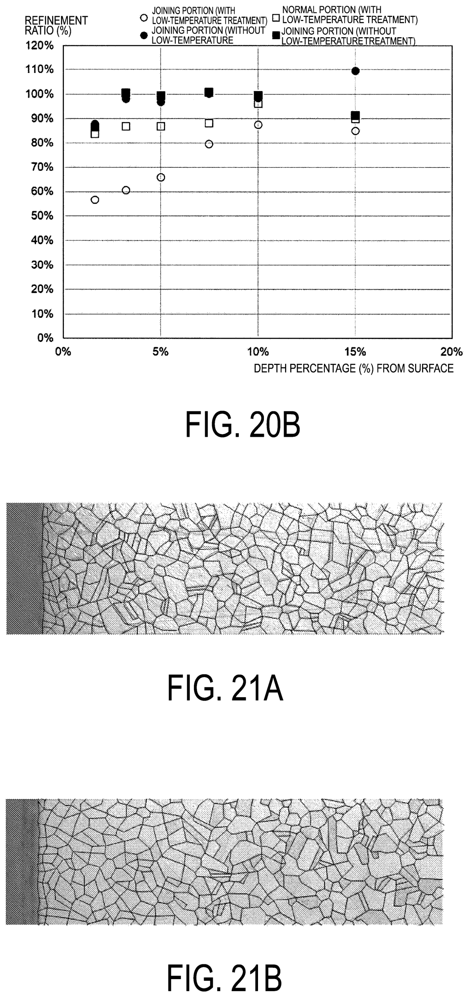

The graph of FIG. 20B shows the results of Tables 7 and 8, and shows the change in the average crystal grain size with respect to the depth percentage (%) from the surface.

Table 7

| MEASUREMENT LOCATION | | REFINEMENT RATIO (%) MEASUREMENT POSITION: DISTANCE (μm) FROM SURFACE DEPTH PERCENTAGE (%) FROM SURFACE | | | | | |
|---|---|---|---|---|---|---|---|
| | | 12.8 1.6% | 25.6 3.2% | 40 5.0% | 60 7.5% | 80 10% | 120 15% |
| JOINING PORTION | (1) | 55% | 55% | 59% | 75% | 92% | 75% |
| | (2) | 52% | 62% | 67% | 78% | 85% | 85% |
| | (3) | 56% | 62% | 65% | 79% | 88% | 85% |
| | (4) | 63% | 66% | 72% | 86% | 86% | 94% |
| | AVERAGE | 57% | 61% | 66% | 80% | 88% | 85% |
| NORMAL PORTION | (1) | 70% | 76% | 76% | 76% | 84% | 84% |
| | (2) | 82% | 82% | 82% | 74% | 82% | 74% |
| | (3) | 81% | 88% | 88% | 117% | 106% | 88% |
| | (4) | 103% | 103% | 103% | 86% | 115% | 115% |
| | AVERAGE | 84% | 87% | 87% | 88% | 96% | 90% |

Table 8

| MEASUREMENT LOCATION | | REFINEMENT RATIO (%) MEASUREMENT POSITION: DISTANCE (µm) FROM SURFACE DEPTH PERCENTAGE (%) FROM SURFACE | | | | | |
|---|---|---|---|---|---|---|---|
| | | 12.8 1.6% | 25.6 3.2% | 40 5.0% | 60 7.5% | 80 10% | 120 15% |
| JOINING PORTION | (1) | 93% | 114% | 110% | 120% | 105% | 105% |
| | (2) | 83% | 83% | 83% | 93% | 93% | 114% |
| | (3) | 88% | 96% | 97% | 100% | 99% | 108% |
| | (4) | 88% | 98% | 98% | 88% | 98% | 110% |
| | AVERAGE | 88% | 98% | 97% | 100% | 99% | 109% |
| NORMAL PORTION | (1) | 91% | 91% | 91% | 91% | 91% | 80% |
| | (2) | 85% | 106% | 106% | 106% | 85% | 85% |
| | (3) | 78% | 97% | 97% | 86% | 130% | 97% |
| | (4) | 93% | 108% | 104% | 120% | 93% | 105% |
| | AVERAGE | 87% | 101% | 100% | 101% | 100% | 92% |

In Tables 9 and 10, based on the measurement results in Tables 7 and 8, respectively, the refinement ratio of the crystal was determined from the average crystal grain size of the surface layer (region from the surface to a depth of 5%) of the second metal member 4 and the average crystal grain size of the inner portion (region where the depth from the surface is 20% or more and 65% or less). The refinement ratio of the crystal is calculated by the following formula.

Formula: refinement ratio (%) = {(average crystal grain size of surface layer)/(average crystal grain size of inner portion)} × 100

Table 9

| WITH LOW-TEMPERATURE TREATMENT | AVERAGE CRYSTAL GRAIN SIZE (μm) | | REFINEMENT RATIO (%) |
|---|---|---|---|
| | SURFACE LAYER | INNER PORTION | |
| JOINING PORTION | 10.2 | 16.7 | 61% |
| NORMAL PORTION | 13.9 | 16.2 | 86% |

Table 10

| WITHOUT LOW-TEMPERATURE TREATMENT | AVERAGE CRYSTAL GRAIN SIZE (μm) | | REFINEMENT RATIO (%) |
|---|---|---|---|
| | SURFACE LAYER | INNER PORTION | |
| JOINING PORTION | 17.2 | 18.4 | 94% |
| NORMAL PORTION | 18.7 | 19.6 | 96% |

As apparent from these test results, in the joined body subjected to the low-temperature treatment with liquid nitrogen, the crystal was refined in the second surface layer 4a1 of the second joining portion 10b (refinement ratio of the crystal of 61%), and when the average crystal grain size of the second inner portion 4b was 100%, the refinement ratio of the second surface layer 4a1 was 56 to 67%. On the other hand, the normal portion had a refinement ratio of 86%, and refinement of the crystal was hardly observed.

In the joined body not subjected to the low-temperature treatment, the refinement ratio in the joining portion is also 94%, the refinement ratio in the normal portion is about 96%, and the crystal in the surface layer portion is not substantially refined.

Reference Example

Using a metal simple substance having a columnar shape of the same material as the second metal member 4 used in Examples 1 and 2, refinement of the crystal of a sample subjected to the low-temperature treatment by being immersed for 10 minutes in liquid nitrogen at -100°C or less was examined. The measurement locations were four arbitrary locations. For comparison, refinement of the crystal was also examined for a sample not subjected to low-temperature treatment.

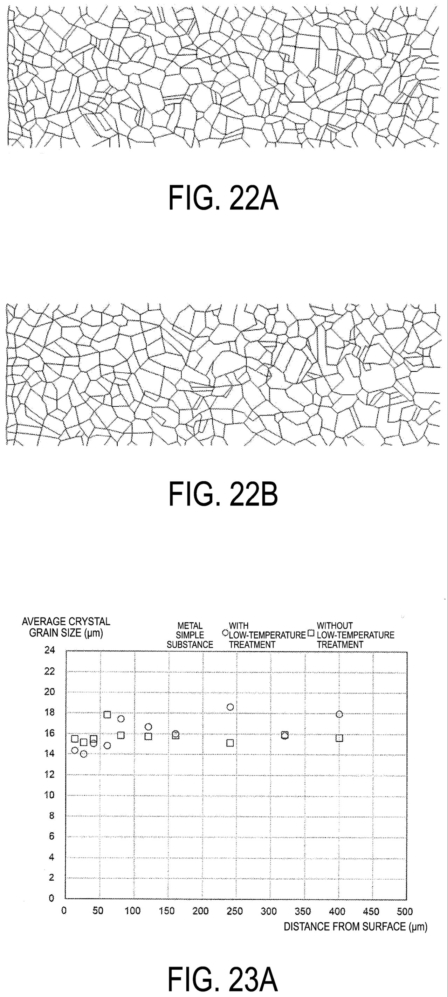

FIGs. 21A and 21B are microscope images capturing the crystal shape of a cross section of a metal simple substance subjected to the low-temperature treatment and a metal simple substance not subjected to the low-temperature treatment, respectively. In these figures, the crystal shape is traced. FIGs. 22A and 22B are views illustrating the trace of the crystal shapes illustrated in FIGs. 21A and 21B, respectively.

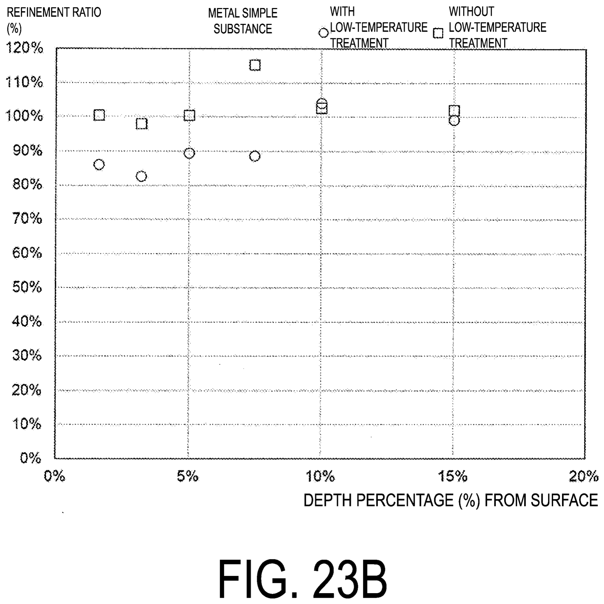

The measurement of the average crystal grain size and the calculation of the refinement ratio were performed in the same method as in Example 1. The results are shown in Tables 11, 12, and 13 and FIGs. 23A and 23B.

Table 11

| MEASUREMENT LOCATION | | AVERAGE CRYSTAL GRAIN SIZE (μm) (MEASUREMENT POSITION: DISTANCE (μm) FROM SURFACE DEPTH PERCENTAGE (%) FROM SURFACE) | | | | | | | | | | |
|---|---|---|---|---|---|---|---|---|---|---|---|---|
| | | 12.8 1.6% | 25.6 3.2% | 40 5.0% | 60 7.5% | 80 10% | 120 15% | 160 20% | 240 30% | 320 40% | 400 50% | 520 65% |
| WITH LOW-TEMPERA-TURE TREATMENT | (1) | 13.5 | 12.2 | 13.6 | 12.5 | 21.4 | 21.4 | 18.8 | 21.4 | 15.0 | 15.0 | 13.6 |
| | (2) | 16.8 | 12.1 | 15.0 | 16.7 | 16.7 | 15.0 | 13.6 | 15.0 | 16.7 | 16.7 | 13.6 |
| | (3) | 13.6 | 15.0 | 15.0 | 13.6 | 16.7 | 16.7 | 15.0 | 16.7 | 16.7 | 18.8 | 21.4 |
| | (4) | 13.6 | 16.7 | 16.7 | 16.7 | 15.0 | 13.6 | 16.7 | 21.4 | 15.0 | 21.4 | 15.0 |
| | AVERAGE | 14.4 | 14.0 | 15.1 | 14.9 | 17.5 | 16.7 | 16.0 | 18.6 | 15.9 | 18.0 | 15.9 |
| WITHOUT LOW-TEM-PERATURE TREAT-MENT | (1) | 15.0 | 16.7 | 13.6 | 18.8 | 15.0 | 15.0 | 15.0 | 16.7 | 15.0 | 18.8 | 16.7 |
| | (2) | 13.6 | 13.6 | 16.7 | 18.8 | 16.7 | 16.7 | 15.0 | 16.7 | 18.8 | 13.6 | 13.6 |
| | (3) | 16.7 | 16.7 | 16.7 | 18.8 | 15.0 | 18.8 | 16.7 | 13.6 | 15.0 | 13.6 | 15.0 |
| | (4) | 16.7 | 13.6 | 15.0 | 15.0 | 16.7 | 12.5 | 16.7 | 13.6 | 15.0 | 16.7 | 13.6 |
| | AVERAGE | 15.5 | 15.2 | 15.5 | 17.9 | 15.9 | 15.8 | 15.9 | 15.2 | 16.0 | 15.7 | 14.7 |

CRYSTAL GRAIN SIZE (UNIT: μm)

Table 12

| MEASUREMENT LOCATION | | REFINEMENT RATIO (%) MEASUREMENT POSITION: DISTANCE (μm) FROM SURFACE DEPTH PERCENTAGE (%) FROM SURFACE | | | | | REFINEMENT RATIO (UNIT: %) |
|---|---|---|---|---|---|---|---|
| | | 12.8 1.6% | 25.6 3.2% | 40 5.0% | 60 7.5% | 80 10% | 120 15% |
| WITH LOW-TEMPERATURE TREATMENT | (1) | 81% | 73% | 81% | 75% | 128% | 128% |
| | (2) | 111% | 80% | 99% | 110% | 110% | 99% |
| | (3) | 77% | 85% | 85% | 77% | 94% | 94% |
| | (4) | 76% | 93% | 93% | 93% | 84% | 76% |
| | AVERAGE | 86% | 83% | 90% | 89% | 104% | 99% |
| WITHOUT LOW-TEMP ERATURE TREATMENT | (1) | 91% | 102% | 83% | 114% | 91% | 91% |
| | (2) | 88% | 88% | 107% | 121% | 107% | 107% |
| | (3) | 113% | 113% | 113% | 127% | 101% | 127% |
| | (4) | 110% | 90% | 99% | 99% | 110% | 83% |
| | AVERAGE | 101% | 98% | 101% | 115% | 103% | 102% |

Table 13

| METAL SIMPLE SUBSTANCE | AVERAGE CRYSTAL GRAIN SIZE ($\mu$m) | | REFINEMENT RATIO (%) |
|---|---|---|---|
| | SURFACE LAYER | INNER PORTION | |
| WITH LOW-TEMPERATURE TREATMENT | 14.5 | 16.9 | 86% |
| WITHOUT LOW-TEMPERATURE TREATMENT | 15.4 | 15.5 | 99% |

As shown in Tables 11, 12, and 13 and FIGs. 23A and 23B, refinement of the crystal was not observed in any of the metal simple substance subjected to the low-temperature treatment and the metal simple substance not subjected to the low-temperature treatment.

Although an embodiment of the present disclosure has been described above, the joined body of the present disclosure is not limited to the above embodiment, and various changes and improvements can be made.

REFERENCE SIGNS

2 First metal member
2a1 First surface layer
2b First inner portion
2a2 Surface layer away from first joining portion
4 Second metal member
4a1 Second surface layer
4b Second inner portion
4a2 Surface layer away from second joining portion
5 Through hole
6 Insulating member
8a, 8b Gap portion
10a First joining portion
10b Second joining portion
12 Joining material
12a1 First extending portion
12a2 First filling portion
12b1 Second extending portion
12b2 Second filling portion
14 Chamfered portion
20 Joined body

**Claims**

1.　A joined body of a metal and an insulator, the joined body comprising:

a metal member;
an insulating member; and
a joining material that joins the metal member and the insulating member, wherein
when a site in contact with the joining material on a surface of the metal member is defined as a joining portion, an average crystal grain size of a surface layer of the metal member in the joining portion is smaller than an average crystal grain size of an inner portion of the metal member.

2.　The joined body of a metal and an insulator according to claim 1, wherein

the insulating member and the metal member face each other with a gap portion in between, and
at least a part of the joining material is located in the gap portion.

3.　The joined body of a metal and an insulator according to claim 1, wherein
the joining material has a fillet shape extending in a direction away from the insulating member along the surface of the metal member and in contact with a part of the surface of the metal member and a part of a surface of the insulating member.

4. The joined body of a metal and an insulator according to claim 2, wherein
the joining material has a fillet shape extending in a direction away from the insulating member along the surface of the metal member and in contact with a part of the surface of the metal member and a part of the surface of the insulating member.

5. The joined body of a metal and an insulator according to any one of claims 1 to 4, wherein
the average crystal grain size of the surface layer of the metal member away from the joining portion is smaller than the average crystal grain size of the inner portion of the metal member, and is larger than the average crystal grain size of the surface layer of the metal member at the joining portion.

6. The joined body of a metal and an insulator according to any one of claims 1 to 4, wherein

the metal member comprises a first metal member comprising a tubular body, and
the insulating member is located in an inner wall of the tubular body of the first metal member.

7. The joined body of a metal and an insulator according to any one of claims 1 to 4, wherein

the metal member comprises a second metal member comprising a columnar body, the insulating member comprises a through hole, and
the second metal member extends through the through hole.

8. The joined body of a metal and an insulator according to any one of claims 1 to 4, wherein

the metal member comprises a first metal member comprising a tubular body and a second metal member comprising a columnar body,
the insulating member is located in an inner wall of the tubular body of the first metal member and comprising a through hole, and
the second metal member extends through the through hole.

9. The joined body of a metal and an insulator according to any one of claims 1 to 4, wherein
the metal member contains Fe, Ni, and Co, and a total content of the Fe, the Ni, and the Co is 99 mass% or more.

10. The joined body of a metal and an insulator according to any one of claims 1 to 4, wherein
the insulating member contains any of alumina, zirconia, silicon nitride, silicon carbide, forsterite, cordierite, and sapphire as a main component.

11. The joined body of a metal and an insulator according to any one of claims 1 to 4, wherein
the joining material comprises metal or glass.

12. The joined body of a metal and an insulator according to any one of claims 1 to 4, wherein

the metal member contains 40 mass% or more and 56 mass% or less of Fe, 25 mass% or more and 40 mass% or less of Ni, and 10 mass% or more and 30 mass% or less of Co,
the insulating member contains alumina, and
the joining material contains a brazing material containing Ag and Cu and having a total content of the Ag and the Cu of 90 mass% or more.

13. An electromagnetic wave permeable window member using the joined body according to claim 10.

14. A power feeding terminal using the joined body according to claim 7.

15. A hermetic terminal using the joined body according to claim 8.

16. A hermetic terminal using the joined body according to claim 12.

**17.** The hermetic terminal according to claim 16 to be used in an environment of -100°C or less.

**18.** A method for producing a joined body of a metal and an insulator, the method comprising:

preparing a metal member, an insulating member, and a joining material containing metal or glass;
joining the insulating member and the metal member with the joining material to fabricate a pre-joined body; and
cooling the pre-joined body at an ambient temperature of -100°C or less to obtain a joined body.

**19.** The method for producing a joined body of a metal and an insulator according to claim 17, wherein
the cooling is performed by immersing the pre-joined body in a liquid containing any of liquid nitrogen, liquid oxygen, and liquid hydrogen as a main component.

FIG. 1

FIG. 2

FIG. 3

FIG. 4A

FIG. 4B

FIG. 5A

FIG. 5B

FIG. 6

FIG. 7A

FIG. 7B

**FIG. 8**

FIG. 9A

FIG. 9B

FIG. 10

FIG. 11

INSULATING MEMBER          METAL MEMBER

JOINING ← JOINING MATERIAL

COOLING

JOINED BODY OF METAL AND INSULATING MEMBER

# FIG. 12

4          4

6

5          5

20

2

# FIG. 13

FIG. 14A

FIG. 14B

FIG. 15A

2

FIG. 15B

2

FIG. 16A

2

FIG. 16B

AVERAGE CRYSTAL
GRAIN SIZE (μm)

○ JOINING     □ NORMAL
   PORTION       PORTION

DISTANCE FROM SURFACE (μm)

# FIG. 17A

REFINEMENT
RATIO (%)

JOINING        NORMAL
○ PORTION    □ PORTION

DEPTH PERCENTAGE (%) FROM SURFACE

# FIG. 17B

35

FIG. 18A

FIG. 18B

FIG. 19A

4

## FIG. 19B

AVERAGE
CRYSTAL GRAIN
SIZE (µm)

○ JOINING PORTION (WITH
LOW-TEMPERATURE TREATMENT)

● JOINING PORTION (WITHOUT
LOW-TEMPERATURE TREATMENT)

□ NORMAL PORTION (WITH
LOW-TEMPERATURE TREATMENT)

■ NORMAL PORTION (WITHOUT
LOW-TEMPERATURE TREATMENT)

DISTANCE FROM SURFACE (µm)

## FIG. 20A

FIG. 20B

FIG. 21A

FIG. 21B

FIG. 22A

FIG. 22B

FIG. 23A

FIG. 23B

## INTERNATIONAL SEARCH REPORT

| International application No. |
|---|
| **PCT/JP2024/021572** |

**A. CLASSIFICATION OF SUBJECT MATTER**

*C04B 37/02*(2006.01)i
FI:   C04B37/02 B

According to International Patent Classification (IPC) or to both national classification and IPC

**B. FIELDS SEARCHED**

Minimum documentation searched (classification system followed by classification symbols)

C04B37/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-323856 A (GE MEDICAL SYSTEMS GLOBAL TECHNOLOGY CO. LLC) 14 November 2003 (2003-11-14) | 1-17 |
|   | claims, paragraphs [0002], [0011], [0016] |   |
| A |   | 18-19 |
| X | WO 2014/175424 A1 (KYOCERA CORPORATION) 30 October 2014 (2014-10-30) | 1-2, 5-6, 10-11, 14 |
|   | claims, paragraphs [0032]-[0043] |   |
| A |   | 3-4, 7-9, 12-13, 15-19 |
| X | JP 59-146987 A (MITSUI ENGINEERING & SHIPBUILDING CO., LTD.) 23 August 1984 (1984-08-23) | 1-5, 10-11 |
|   | claims, p. 2, upper left column, lines 9-12, upper right column, line 17 to p. 3, upper left column, line 16, upper right column, line 13 to lower right column, line 6 |   |
| Y |   | 6-9, 12, 14-17 |
| A |   | 13, 18-19 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 July 2024** | **13 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/021572**

### C. DOCUMENTS CONSIDERED TO BE RELEVANT

| Category* | Citation of document, with indication, where appropriate, of the relevant passages | Relevant to claim No. |
|---|---|---|
| Y | JP 1-111784 A (KABUSHIKI KAISHA TOSHIBA) 28 April 1989 (1989-04-28) p. 2, lower left column, line 9 to lower right column, line 16 | 6-9, 12, 14-17 |
| A | | 1-5, 10-11, 13, 18-19 |
| X | JP 61-242967 A (KABUSHIKI KAISHA TOSHIBA) 29 October 1986 (1986-10-29) claims, p. 2, lower right column, lines 14-17, p. 3, upper left column, line 3 to lower right column, line 3 | 18-19 |
| X | WO 2020/105734 A1 (DENKA CO., LTD.) 28 May 2020 (2020-05-28) claims, paragraphs [0025], [0034], [0045]-[0047], [0084]-[0102], fig. 2 | 1-5, 10-11 |
| A | | 6-9, 12, 14-19 |
| Y | | 13 |
| Y | JP 2022-162861 A (MITSUBISHI ELECTRIC CORPORATION) 25 October 2022 (2022-10-25) paragraphs [0003]-[0005] | 13 |

Form PCT/ISA/210 (second sheet) (July 2022)

## INTERNATIONAL SEARCH REPORT
### Information on patent family members

International application No.

**PCT/JP2024/021572**

| Patent document cited in search report | | | Publication date (day/month/year) | Patent family member(s) | | | Publication date (day/month/year) |
|---|---|---|---|---|---|---|---|
| JP | 2003-323856 | A | 14 November 2003 | US 2003/0201112 A1 claims, paragraphs [0002], [0016], [0021] | | | |
| WO | 2014/175424 | A1 | 30 October 2014 | US 2016/0061447 A1 claims, paragraphs [0040]-[0054] CN 105165113 A | | | |
| JP | 59-146987 | A | 23 August 1984 | (Family: none) | | | |
| JP | 1-111784 | A | 28 April 1989 | US 4917642 A column 1, lines 11-14 | | | |
| JP | 61-242967 | A | 29 October 1986 | (Family: none) | | | |
| WO | 2020/105734 | A1 | 28 May 2020 | US 2022/0009842 A1 claims, paragraphs [0033], [0050], [0071]-[0074], [0168]-[0201] CN 113165986 A | | | |
| JP | 2022-162861 | A | 25 October 2022 | (Family: none) | | | |

Form PCT/ISA/210 (patent family annex) (July 2022)

**EP 4 729 498 A1**

**REFERENCES CITED IN THE DESCRIPTION**

**Patent documents cited in the description**

- JP 2003323856 A